Europäisches Patentamt

European Patent Office

Office européen des brevets

(19)

(11) Veröffentlichungsnummer: **0 331 776**

**A1**

# (12) EUROPÄISCHE PATENTANMELDUNG

(21) Anmeldenummer: **88103678.4**

(22) Anmeldetag: **09.03.88**

(51) Int. Cl.4: **H01H 35/42**

(30) Priorität: **11.04.87 DE 3712404**

(43) Veröffentlichungstag der Anmeldung:
**13.09.89 Patentblatt 89/37**

(84) Benannte Vertragsstaaten:
**CH FR GB IT LI NL SE**

(71) Anmelder: **ROBERT KRUPS STIFTUNG & CO. KG.**
**Heresbachstrasse 29**
**D-5650 Solingen 19(DE)**

(72) Erfinder: **Mahlich, Gotthard Chr., Dipl.-Ing.**
**Auf dem Kämpchen 29**
**D-5650 Solingen 11(DE)**

(74) Vertreter: **Mentzel, Norbert, Dipl.-Phys. et al**
**Patentanwälte Dipl.-Phys. Buse Dipl.-Phys.**
**Mentzel Dipl.-Ing. Ludewig Unterdörnen 114**
**D-5600 Wuppertal 2(DE)**

(54) **Schutzeinrichtung für elektrisch betriebene Geräte.**

(57) Es handelt sich um eine Schutzeinrichtung für elektrisch betriebene Geräte, insbesondere für Feuchtraumgeräte, wie Haushaltsgeräte für Bad, Küche, Keller, Garten od.dgl. Die Schutzeinrichtung besteht aus einer auf in das Gerätegehäuse eindringende leitfähige Flüssigkeit ansprechenden elektronischen, z.B. Feuchtigkeitssensoren aufweisenden Schaltung und einem von dieser auslösbaren Schutzschalter (10). Der Schutzschalter ist dabei als ein wenigstens einpolig die Stromzuführung zum überwachenden Gerät mittelbar oder unmittelbar unterbrechenden Zerstörungsglied, (14) insbesondere Explosionsglied ausgebildet. Der Vorteil eines solchen Schalters ist eine extrem kurze Reaktionszeit.

FIG.1

## Schutzeinrichtung für elektrisch betriebene Geräte

Die Erfindung bezieht sich auf eine Schutzeinrichtung für elektrisch betriebene Geräte, insbesondere für Feuchtraumgeräte, wie Haushaltsgeräte für Bad, Küche, Keller, Garten und dergl., bestehend aus einer auf in das Gerätegehäuse eindringende, leitfähige Flüssigkeit ansprechenden elektronischen z.B. Feuchtigkeitssensoren aufweisenden Schaltung und einem von dieser auslösbaren Schutzschalter.

Eine solche Schutzeinrichtung ist durch die EP-Patentanmeldung 0 088 390 bekanntgeworden. Zum Schutz für Benutzer elektrisch betriebener Geräte in Feuchträumen und dergl. gegen einen elektrischen Schlag besteht diese bekannte Schutzeinrichtung aus einer Sonde in Form eines bei der Handhabung des Gerätes nicht berührbaren, offenen elektrischen Doppelleiters, die bei Anwesenheit von Flüssigkeit ihren elektrischen Impedanzwert ändert und am Eingang einer Zündschaltung mit einem Halbleiterschalter liegt, die den Heizleiterschalter zündet, wenn sich der Impedanzwert der Sonde ändert. Der dann fließende Strom löst einen selbsttätig öffnenden, mechanischen Schalter aus, dessen Kontakte in den Netzleitungen des Gerätes liegen und geschlossen gehalten sind durch einen Werkstoff, der durch mittelbares oder unmittelbares Erhitzen mittels dieses Stromes schmilzt.

Bei einer Ausführungsform einer solchen Schutzeinrichtung wird ein einpolig selbstöffnender, mechanischer Schalter eingesetzt, der durch einen Schmelzdraht freigegeben werden kann. Um dieses zu erreichen, sind in einem Isolierstoffsockel eine starre Kontaktfeder sowie eine bewegliche Kontaktfeder und ein Federbügel eingegossen. Diese Teile bilden zusammen mit einer Sprungfeder einen sogenannten Sprungfederkontakt. Dieser schließt sich, sobald der Federbügel niedergedrückt wird und öffnet sich, sobald der Federbügel nach oben freigegeben wird. Am vorderen Ende des vorgespannten Federbügels ist ein Kunststoffanker aufgespritzt, über den ein Schmelzdraht gelegt ist, der mit zwei Stiften zusammenwirkt. Bei diesem Schalter wird die eine Netzleitung über die erwähnten beiden Stifte und die andere Netzleitung über die beiden Federn geführt. Dabei muß der Schmelzdraht derart dimensioniert sein, daß er den Nennstrom des Gerätes ohne die Gefahr eines ungewollten Auslösens führen kann.

Die bekannte Schutzeinrichtung hat an sich den Vorteil, daß beim Eindringen von z.B. Wasser in das Gerätegehäuse die Netzspannung im Gerät allpolig abgeschaltet werden kann, bevor der Benutzer über das eindringende Wasser mit spannungsführenden offenen Teilen in Verbindung kommen kann. Dabei ist dafür gesorgt, daß die Abschaltung durch die Bauart des verwendeten mechanischen Schalters irreversibel ist. Dies bedeutet, daß ein durchnäßtes Gerät nicht sogleich wieder in Betrieg genommen werden kann.

Auf der anderen Seite ist die bekannte Schutzeinrichtung verhältnismäßig aufwendig und daher teuer. Zum anderen ist die Reaktionszeit verhältnismäßig groß.

Der Erfindung liegt die Aufgabe zugrunde, eine Schutzeinrichtung für elektrisch betriebene Geräte der eingangs näher gekennzeichneten Art weiter zu verbessern. Dabei sollen die angeführten Vorteile der bekannten Ausführungsform beibehalten bleiben, zugleich aber eine wirtschaftlichere Herstellung der Schutzeinrichtung ermöglicht werden und vor allem die Reaktionszeit im Vergleich mit dem Bekannten verkürzt werden.

Dieses Ziel ist erfindungsgemäß dadurch erreicht, daß der Schutzschalter als ein wenigstens einpolig die Stromführung zum überwachenden Gerät mittelbar oder unmittelbar unterbrechendes Zerstörungsglied, insbesondere Explosionsglied ausgebildet ist. Die erfindungsgemäße Ausbildung des Schutzschalters einer Schutzeinrichtung für elektrisch betriebene Geräte hat gegenüber dem Bekannten erhebliche Vorteile. Insbesondere hat der Schutzschalter gegenüber allen bisher bekannten Lösungen eine extrem kurze Reaktionszeit. Sie liegt in der Größenordnung von 2 bis 3 m sec. Ferner ist durch die erfindungsgemäße Ausbildung des Schutzschalters die Möglichkeit gegeben, durch konstruktive Maßnahmen einen Lichtbogen zu vermeiden. Dies kann z.B. durch Ausblasen des Lichtstromes oder aber durch das sofortige Erreichen von großen Trennstrecken erzielt werden.

Die Erfindung läßt sich in mannigfacher Weise realisieren. So ist bei einer ersten Ausführungsform vorgesehen, durch das Explosionsglied ein mechanisches, pneumatisches oder auch chemisches Zwischenglied zu beeinflussen, durch welches das mindestens einpolige Unterbrechen der Stromzuführung zum überwachenden Gerät erfolgt. Als beeinflußbare Zwischenglieder seien genannt Klinken, Kolben, Gase, Flüssigkeiten oder auch Chemikalien.

Beispielsweise ist das Zwischenglied als unter der Einwirkung einer Feder, wie einer Zugfeder, stehende Klinke ausgebildet, die durch das Explosionsglied in ihrer Kontakte schließenden Arbeitslage gehalten ist, aus der sie beim Ansprechen der Überwachungsschaltung und dem dadurch bedingten Zünden des Explosionsgliedes schlagartig in ihre unwirksame Ruhelage überführbar ist.

Dabei ist es zweckmäßig, daß der bewegliche der beiden Kontakte von einer Schnappfeder od.dgl. getragen wird.

Nach einem anderen Vorschlag der Erfindung ist das Explosionsglied demgegenüber unmittelbar mit einer vorzugsweise als Leiterbahn gestalteten Stromführung verbunden. In diesem Falle erfolgt die Einwirkung direkt und zwar durch die Explosionsschockwelle oder die Explosionswärme.

Dabei ist es zweckmäßig, die Leiterbahn auf einer Trägerplatte anzuordnen, die eine Aufnahme zur Unterbringung des Explosionsgliedes aufweist, wobei diese Leiterbahn nach oben hin durch eine Deckplatte abgedeckt ist, die im Bereich des Explosionsgliedes eine Durchbrechung aufweist.

Nach einem anderen Vorschlag der Erfindung wird als Explosionsglied eine Blitzlichtlampe benutzt. Dabei kann es sich um Blitzlichtlampen handeln, die in ihrem Aufbau grundsätzlich bekannt sind und die z.B. in Verbindung mit Fotogeräten aller Art Verwendung finden. Dabei ist vorgesehen, die Zündwatte einer solchen Blitzlichtlampe durch Ansprechen der Feuchtigkeitssensoren der elektronischen Schaltung zu zünden und dadurch die durch die Blitzlichtlampe geführte Zuführungsleitung zum Gerät schlagartig zu unterbrechen.

Um bei dieser Ausführungsform sofort eine große Trennstrecke zu erreichen, ist es zweckmäßig, eine Feder in dem innerhalb der Blitzlichtlampe liegenden Teilabschnitt der Zuführungsleitung zum Gerät anzuordnen.

Auf der Zeichnung ist die Erfindung in mehreren Ausführungsbeispielen dargestellt und zwar zeigen:

Fig. 1 in schematischer Darstellung eine erste Ausführungsform der erfindungsgemäßen Schutzeinrichtung für elektrisch betriebene Geräte, bei der in ausgezogenen Lagen die Arbeitslage (Schließlage) der Kontakte wiedergegeben ist, während die Öffnungslage der Kontakte strichpunktiert dargestellt wurde,

Fig. 2 im Längsschnitt eine zweite Ausführungsform der erfindungsgemäßen Schutzeinrichtung für elektrisch betriebene Geräte, teilweise weggeschnitten,

Fig. 3 eine Draufsicht auf die Ausführungsform der Schutzeinrichtung nach der Fig. 2, ebenfalls teilweise weggeschnitten,

Fig. 4 eine dritte Ausführungsform der Schutzeinrichtung für elektrisch betriebene Geräte in schematischer Darstellung und

Fig. 5 eine vierte Ausführungsform der erfindungsgemäßen elektrischen Schutzeinrichtung, ebenfalls in schematischer Darstellung.

Es sei zunächst erwähnt, daß in den Figuren der Zeichnungen nur diejenigen Teile der Schutzeinrichtung für elektrisch betriebene Geräte dargestellt sind, welche für das Verständnis der Erfindung Bedeutung haben. So fehlen insbesondere Angaben über die Ausbildung der Feuchtraumgeräte. Hierbei handelt es sich insbesondere um Haushaltsgeräte, die für Bad, Küche, Keller, Garten od.dgl. bestimmt sind. Alle diese Feuchtraum- oder Haushaltsgeräte können eine an sich bekannte Ausbildung haben. Das Gleiche gilt auch für die elektronische Schaltung, die auf in das Gerätegehäuse eindringende, leitfähige Flüssigkeit anspricht und welche z.B. Feuchtigkeitssensoren enthält.

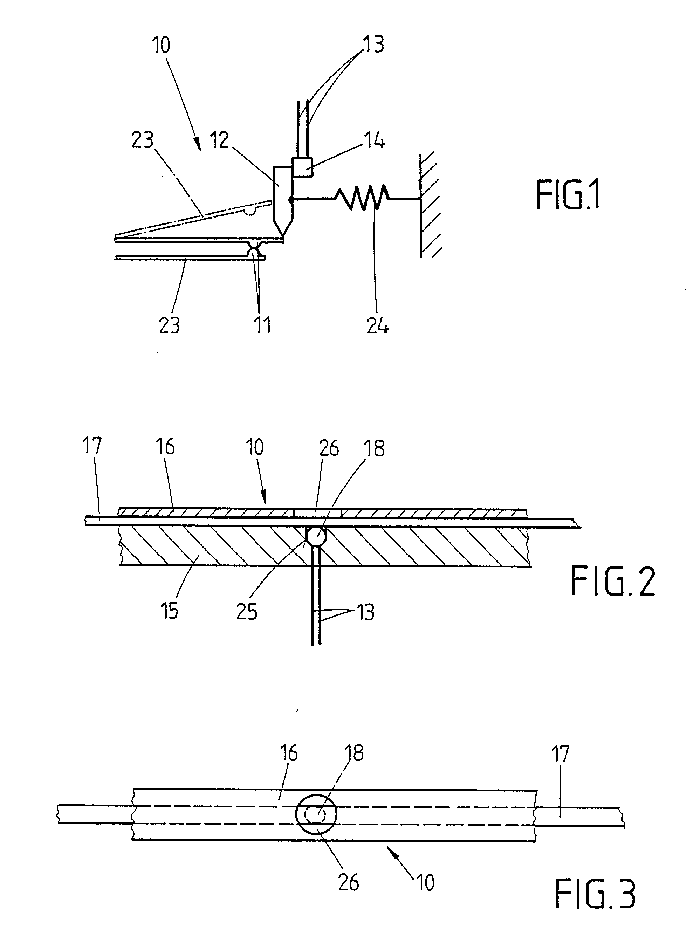

In dem ersten Ausführungsbeispiel nach der Fig. 1 der Zeichnung ist der Schutzschalter generell mit 10 bezeichnet. Die beiden Kontakte 11, die sich in der in ausgezogenen Linien dargestellten Schließlage befinden, sind in grundsätzlich bekannter Weise jeweils an einer Wandung eines Kontaktträgers 23 angebracht, von denen wenigstens der eine, vorzugsweise der in der Fig. 1 obenliegende, als Schnappfeder ausgebildet ist. In der in Fig. 1 wiedergegebenen Lage der Einzelteile des Schutzschalters 10 ist eine Klinke 12 wirksam, die unter der Einwirkung einer Feder, insbesondere einer Zugfeder 24 steht, deren eines Ende an einer ortsfesten Wandung angebracht ist, während das gegenüberliegende andere Ende mit der Klinke 12 zusammenwirkt. Das Verschieben der Klinke 12 und damit das Öffnen der Kontakte 11 wird dadurch verhindert, daß das Explosionsglied 14 an der einen Seite der Klinke 12 anliegt. Mit 13 sind die Zuleitungen bezeichnet, die zu den Sensoren führen, die in der Fig. 1 der Einfachheit halber nicht mit dargestellt sind, weil sie - wie erwähnt -eine bekannte Ausbildung haben können.

Der Schutzschalter 10 kann somit durch den Einsatz eines durch Flüssigkeitssensoren elektrisch aktivierten elektrochemischen Explosionsgliedes 14 die Stromführung zwischen der Stromversorgung und dem Verbraucher auftrennen. Sobald das Explosionsglied 14 zerstört ist, wird die Unterstützung der Klinke 12 aufgehoben und die Feder 24 kann die Klinke schlagartig zurückziehen mit dem Erfolg, daß der obere der beiden Kontaktträger 23 in die in der Fig. 1 strichpunktiert dargestellte Lage überführt und damit das Aneinanderliegen der Beiden Kontakte 11 unterbrochen ist. Von besonderer Bedeutung ist dabei die extrem kurze Reaktionszeit beim Ansprechen des Schutzschalters, die in der Größenordnung von 2 bis 3 m sec liegt.

In den Fig. 2 und 3 der Zeichnung ist eine zweite Ausführungsform des Schutzschalters 10 dargestellt. In diesem Falle ist das nunmehr mit 18 bezeichnete Explosionsglied unmittelbar mit der im Ausführungsbeispiel als Leiterbahn 17 gestalteten Stromführung verbunden. Dabei ist die Leiterbahn 17 auf einer Trägerplatte 15 angeordnet, die eine Aufnahme 25 zur Unterbringung des Explosionsgliedes 18 aufweist. Die Leiterbahn ist nach oben hin durch eine Deckplatte 16 abgedeckt, die jedoch im Bereich des Explosionsgliedes 18 eine im gewählten Ausführungsbeispiel im Querschnitt kreisförmige Durchbrechung 26 aufweist. Die Zuleitungen zu den Sensoren, wie Flüssigkeitssensoren, sind wiederum mit 13 bezeichnet.

Bei der Ausführungsform nach den Fig. 2 und 3 der Zeichnung erfolgt die Auftrennung der Leiterbahn 17 direkt durch Einwirkung der Explosionsschockwelle oder der Explosionswärme. Das Explosionsglied 18 kann eine gegenüber der Darstellung in den Fig. 2 und 3 andere Gestalt erhalten. Dabei ist es natürlich erforderlich, die Aufnahme 25 der gewählten Gestalt des Explosionsgliedes 18 anzupassen.

Bei der dritten Ausführungsform des erfindungsgemäßen Schutzschalters 10 ist als Explosionsglied eine Blitzlichtlampe 19 benutzt. Die im Inneren der Blitzlichtlampe 19 befindliche Zündwatte 27 ist durch Ansprechen der Feuchtigkeitssensoren der elektronischen Schaltung zündbar. Die Zuleitung zu diesen Flüssigkeitssensoren ist wiederum schematisch mit 13 dargestellt. Sobald die Feuchtigkeitssensoren ansprechen, wird die durch die Blitzlampe 19 geführte Zuführungsleitung 20 zum Gerät 22 schlagartig unterbrochen.

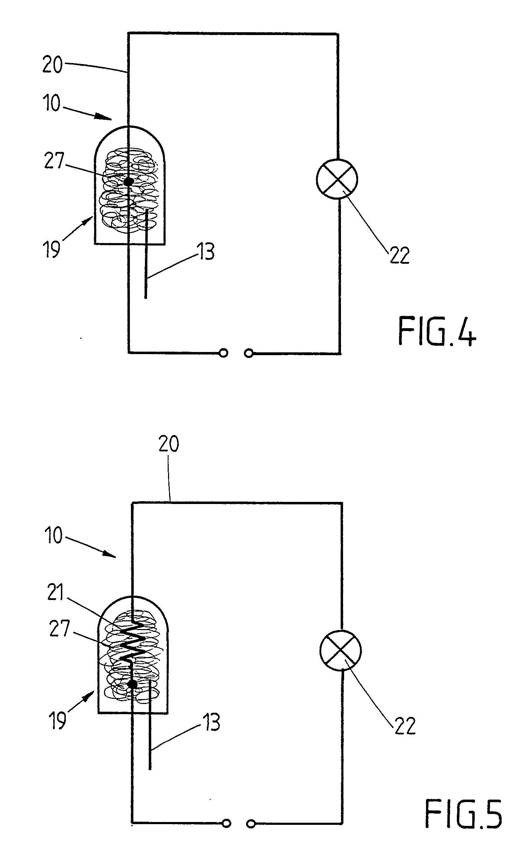

Die Blitzlichtlampe 19 kann einen grundsätzlich bekannten Aufbau haben. Es können somit in der Fotobranche gebräuchliche Blitzlichtlampen eingesetzt werden, nur daß diese zusätzlich die Zuleitung 13 enthalten, die einmal im Bereich der Zündwatte 27 endet und zum anderen an die Flüssigkeitssensoren angeschlossen ist, die in der Fig. 4 der Einfachheit halber nicht mit dargestellt sind.

In der Fig. 5 der Zeichnung ist eine weitere Ausführungsform des Schutzschalters 10 dargestellt, die sich von demjenigen Ausführungsbeispiel nach der Fig. 4 dadurch unterscheidet, daß eine Feder 21 in dem innerhalb der Blitzlichtlampe 19 liegenden Teilabschnitt der Zuführungsleitung 20 zum Gerät 22 vorgesehen ist. Durch die Feder 21 soll das sofortige Erreichen von großen Trennstrecken ermöglicht werden.

Sämtliche dargestellten Ausführungsformen den Schutzschalters haben den Vorteil von extrem kurzen Reaktionszeiten und darüber hinaus die Möglichkeit, durch konstruktive Maßnahmen einen Lichtbogen zu vermeiden. Dies kann, wie in den Zeichnungen nicht dargestellt, durch Ausblasen des Lichtbogens oder aber durch das sofortige Erreichen von großen Trennstrecken herbeigeführt werden. so wie es in der Fig. 5 der Zeichnung veranschaulicht ist.

Wie bereits erwähnt, sind die dargestellten Ausführungen nur beispielsweise Verwirklichungen der Erfindung. Diese ist hierauf nicht beschränkt. Vielmehr sind noch mancherlei andere Ausführungen und Anwendungen möglich. Die Auftrennung der Stromzuführung zwischen Stromversorgung und Verbraucher kann nicht nur durch das mechanisch wirkende Zwischenglied in Form der Klinke 12 gemäßder Fig. 1 der Zeichnung herbeigeführt werden sondern es lassen sich andere mechanische Zwischenglieder, daneben aber auch pneumatische oder chemische einsetzen. Als solche Zwischenglieder kommen Klinken, Kolben, Gase, Flüssigkeiten, aber auch Chemikalien in Frage.

Soweit die Auftrennung der Stromzuführung zwischen Stromversorgung und Verbraucher direkt durch Einwirkung der Explosionsschockwelle oder der Explosionswärme auf die Stromführungen erfolgt, so wie dies in den Fig. 2 und 3 dargestellt ist, kann das Explosionsglied eine andere Gestalt erhalten und in anderer Weise im Bereich der Leiterbahn 17 angeordnet werden. Dies gilt auch für die Unterbringung des Explosionsgliedes 18 in der Aufnahme 25 eines Trägers 15. Auch die in Fig. 1 dargestellte Ausführungsform des Explosionsgliedes 14 ist nur eine von vielen Möglichkeiten. Auch kann das Explosionsglied 14 in einer anderen als der in Fig. 1 dargestellten Weise die Klinke 12 in ihrer wirksamen Lage festhalten. Die Klinke 12 selbst kann auch abweichend vom gezeichneten Ausführungsbeispiel der Fig. 1 gestwltet werden. In allen Fällen ist es gleichgültig, wie die Klinke 12 gelagert ist bzw. wie sie sich nach dem Ansprechen des Explosionsgliedes 14 bewegt. Hier kann auf die in der einschlägigen Technik bekannten Ausbildungen zurückgegriffen werden.

In den dargestellten Ausführungsbeispielen gemäß den Fig. 1 bis 5 der Zeichnung erfolgt beim Ansprechen des jeweiligen Explosionsgliedes immer ein Auftrennen der Stromzuführung zwischen der Stromversorgung und dem Verbraucher, wobei dieses bevorzugt mehrpolig erfolgen kann. Abweichend hiervon ist es aber auch möglich, durch die erfindungsgemäße Ausbildung des Schutzschalters ein Schließen einer Stromzuführung beim Ansprechen des Explosionsgliedes herbeizuführen. Hierdurch lassen sich z.B. Regel- oder Steuerkreise beeinflussen, die dann ihrerseits dafür sorgen, daß der Benutzer des Gerätes 22 geschützt wird.

## Ansprüche

1. Schutzeinrichtung für elektrisch betriebene Geräte, insbesondere für Feuchtraumgeräte, wie Haushaltsgeräte für Bad, Küche, Keller, Garten od.dgl., bestehend aus einer auf in das Gerätegehäuse eindringende leitfähige Flüssigkeit ansprechenden elektronischen, z.B. Feuchtigkeitssensoren aufweisenden Schaltung und einem von dieser auslösbaren Schutzschalter,

**dadurch gekennzeichnet,**

daß der Schutzschalter (10) als ein wenigstens einpolig die Stromzuführung zum überwachenden Gerät (22) mittelbar oder unmittelbar unterbrechendes Zerstörungsglied, insbesondere Explosionsglied (14, 18, 19) ausgebildet ist.

2. Schutzeinrichtung nach Anspruch 1, dadurch gekennzeichnet, daß durch das Explosionsglied (14) ein mechanisches, pneumatischer oder chemisches Zwischenglied beeinflußbar ist, durch welches das mindestens einpolige Unterbrechen der Stromzuführung zum überwachenden Gerät (22) erfolgt.

3. Schutzeinrichtung nach Anspruch 1 und 2, dadurch gekennzeichnet, daß das Zwischenglied als unter der Einwirkung einer Feder, z.B. Zugfeder (24) stehende Klinke (12) ausgebildet ist, die durch das Explosionsglied (14) in ihrer Kontakte (11) schließenden Arbeitslage gehalten ist, aus der sie beim Ansprechen der Überwachungsschaltung und dem dadurch bedingten Zünden des Explosionsgliedes (14) schlagartig in ihre unwirksame Ruhelage überführbar ist.

4. Schutzeinrichtung nach Anspruch 3, dadurch gekennzeichnet, daß der bewegliche der beiden Kontakte (11) von einer Schnappfeder od.dgl. getragen ist.

5. Schutzeinrichtung nach Anspruch 1, dadurch gekennzeichnet, daß das Explosionsglied (14) unmittelbar mit einer vorzugsweise als Leiterbahn (17) gestalteten Stromführung verbunden ist (Fig. 2 und 3).

6. Schutzreinrichtung nach Anspruch 1 und 5, dadurch gekennzeichnet, daß die Leiterbahn (17) auf einer Trägerplatte (15) angeordnet ist, die eine Aufnahme (25) zur Unterbringung des Explosionsgliedes (18) aufweist und daß die Leiterbahn (17) nach oben hin durch eine Deckplatte (16) abgedeckt ist, die im Bereich des Explosionsgliedes (18) eine Durchbrechung (26) aufweist.

7. Schutzeinrichtung nach Anspruch 1, dadurch gekennzeichnet, daß als Explosionsglied eine Blitzlichtlampe (19) benutzbar ist (Fig. 4 und 5).

8. Schutzeinrichtung nach Anspruch 1 und 7, dadurch gekennzeichnet, daß die Zündwatte (27) der Blitzlichtlampe (19) durch Ansprechen der Feuchtigkeitssensoren der elektronischen Schaltung zündbar ist und dadurch die durch die Blitzlichtlampe (19) geführte Zuführungsleitung (20) zum Gerät (22) schlagartig unterbrochen wird.

9. Schutzeinrichtung nach Anspruch 8, gekennzeichnet durch die Anordnung einer Feder (21) in dem innerhalb der Blitzlichtlampe (19) liegenden Teilabschnitt der Zuführungsleitung (20) zum Gerät (22).

Bezugszeichenliste :

10 - Schutzschalter
11 - Kontakt
12 - Klinke
13 - Zuleitungen (zum Überwacher)
14 - Explosionsglied (Fig. 1)
15 - Trägerplatte
16 - Deckplatte
17 - Leiterbahn
18 - Explosionsglied (Fig. 2 und 3)
19 - Blitzlichtlampe
20 - Zuführungsleitung
21 - Feder (in 11)
22 - Gerät
23 - Kontaktträger
24 - Zugfeder (für 12)
25 - Aufnahme (in 15 für 18)
26 - Durchbrechung (in 16)
27 - Zündwatte

FIG.1

FIG.2

FIG.3

Fa. Robert Krups Stiftung & Co KG

FIG.4

FIG.5

Fa. Robert Krups Stiftung & Co KG

**Europäisches Patentamt**

# EUROPÄISCHER RECHERCHENBERICHT

Nummer der Anmeldung

EP 88 10 3678

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 139 301 (ROBERT KRUPS STIFTUNG & CO. KG.) <br> * Anspruch 1; Figuren 3,4,6 * | 1 | H 01 H 35/42 |
| A | | 3,4 | |
| | --- | | |
| D,X | EP-A-0 088 390 (H. GAUS) <br> * Ansprüche 1,3; Figuren 1,3 * | 1 | |
| A | | 3,4 | |
| | --- | | |
| A | EP-A-0 174 891 (SOCIETE PYROMECA) <br> * Ansprüche 1,16; Seite 7, Zeilen 1-30; Figuren 1,3 * | 1,2 | |
| | --- | | |
| A | DE-A-2 317 930 (ETAT FRANCAIS) <br> * Seite 1, Absatz 1-3; Seite 7, Absatz 2 - Seite 8, Absatz 1; Figur 2 * | 1,2 | |
| | --- | | |
| A | US-A-3 875 431 (E.J. KAPP) <br> * Spalte 1, Zeilen 5-22; Figur * | 5,6 | |
| | --- | | |
| A | EP-A-0 235 859 (NORTH AMERICAN PHILIPS CORP.) <br> ----- | | |

**RECHERCHIERTE SACHGEBIETE (Int. Cl.4)**

H 01 H 35/00
H 01 H 39/00
H 02 H 5/00

Der vorliegende Recherchenbericht wurde für alle Patentansprüche erstellt

| Recherchenort | Abschlußdatum der Recherche | Prüfer |
|---|---|---|
| BERLIN | 27-10-1988 | RUPPERT W |